# EUROPÄISCHE PATENTANMELDUNG

(11) **EP 0 547 569 A2**
(43) Veröffentlichungstag der Anmeldung: **23.06.1993**
(21) Anmeldenummer: 92121363.3
(22) Anmeldetag: 16.12.1992
(51) Int. Cl.: B31C 3/00, B29C 53/30, B29C 53/58, B29D 23/18

(54) **Verfahren zum Herstellen eines flexiblen Rohres sowie Vorrichtung zur Durchführung dieses Verfahrens und danach hergestelltes Rohr**

(30) Priorität: 17.12.1991 AT 2499/91; 31.08.1992 DE 4228930; 06.11.1992 DE 4237450
(71) Anmelder: Westaflexwerk GmbH & Co. KG, D-33334 Gütersloh (DE); Joh. Vaillant GmbH u. Co., D-42810 Remscheid (DE)
(72) Erfinder: Beigel, Götz Albert, W-5632 Wermelskirchen (DE); Hogelucht, Martin, W-5630 Remscheid (DE); Paulus, Jochen, W-5630 Remscheid (DE); Wildtraut, Rudolf H., W-4835 Rietberg 4 (DE); Veldboer, Werner, W-4830 Gütersloh (DE); Schappler, Bernd, W-4830 Gütersloh (DE)
(74) Vertreter: Meldau, Gustav, Dipl.-Ing.

(57) **Zusammenfassung**

Aus mindestens einer Lage aus gerilltem und schraubenförmig gewickeltem Band aus Kunststoffolie bestehendes Rohr, das von mindestens einer weiteren Lage aus gerilltem und schraubenförmig gewickeltem Band aus Metall rohrförmig umgeben sein kann. Dabei ist die Kunststoffolie höchstens 0,3 mm stark und besteht aus einem wärmefesten Kunststoff, der hohe Chemikalienbeständigkeit, insbesondere Säurefestigkeit aufweist - sowie Verfahren und Vorrichtung zur Herstellung dieses Rohres.

## Beschreibung

Die Erfindung bezieht sich auf ein Verfahren zum Herstellen eines flexiblen Rohres in Form eines schraubenförmig aus Bändern gewickelten und gerillten Rohres, bei dem mindestens zwei Bandlagen versetzt gegeneinander auf einen Kern zu einem Rohr gewickelt und anschliessend schraubenförmig gerillt werden. Die Erfindung bezieht sich weiterhin auf eine Vorrichtung zur Durchführung des vorgenannten Verfahrens und ein Rohr, das nach diesem Verfahren hergestellt ist.

Es sind zwei grundsätzlich verschiedene Verfahren zum Herstellen von Rohren der eingangs genannten Art bekannt. Nach dem einen Verfahren werden Bänder aus glattem und unterschiedlichem Material überlappend und in einzelnen Bandlagen gegeneinander versetzt auf einen Kern gewickelt und mittels einer sich um diesen Kern drehenden Rillenmutter schraubenförmig gerillt. Die Wickelsteigung bzw. der Wickelwinkel der Bänder einerseits und die schraubenförmige Rillung der zu einem Rohr gewickelten Bänder sind dabei unterschiedlich im Winkel, so daß schon aufgrund dieser Maßnahme eine Festigkeit und ein Zusammenhalt der Bänder bei dem gewickelten und gerillten Rohr zustandekommt, sowie eine verhältnismäßig günstige Flexibilität. Im allgemeinen ist die schraubenförmige Rillung wesentlich enger und hat einen geringeren Steigungswinkel. Nach einem grundsätzlich anderen Verfahren werden in einer Rillenvorrichtung mit einer größeren Anzahl hintereinander liegender Rillenwalzen parallel vorgerillte Bänder erzeugt und auf einem Wickelkern zu einem Rohr gewickelt, wobei die Ränder der Bänder miteinander verfalzt werden. Die Vorbereitung der Verfalzung erfolgt auf der Rillenvorrichtung, und die Schließung der Falze erfolgt nach dem Aufwickeln auf den Wickelkern. Bei derartigen Rohren entspricht der Wicklungswinkel der Bänder der Steigung der schraubenförmigen Rillung. Bei der Mehrzahl der nach dem letzteren Verfahren herstellten Rohre ist die Verfalzung der Bänder miteinander erkennbar.

Die Erfindung bezieht sich auf ein Verfahren der erstgenannten Art und auf Rohre, die danach hergestellt sind. Seit langem bekannt sind Verfahren, Vorrichtungen und damit hergestellte Rohre, die insbesondere aus mehreren, übereinander gewickelten Lagen Bänder bestehen, wobei diese Bänder aus Papier, Kunststoff und dünnen Metallfolien bestehen können, je nach Einsatzzweck und Anforderungen bei der Verwendung. Um derartige Rohre für ihre Einsatzzwecke stabiler zu machen, wurden auch beim Aufwickeln auf den Wickelkern die einzelnen Bänder bzw. Bandlagen miteinander verklebt (DE-PS 1 029 218; DE-AS 1 130 681), wobei diese Druckschriften zum Stand der Technik nur beispielsweise genannt sind.

Auf dem Gebiet der Heizung und Warmwasserbereitung mit gasförmigen oder flüssigen Brennstoffen, insbesondere für Wohnhäuser, hat sich in den letzten Jahren die sogenannte "Brennwert-Technik" entwickelt. Dabei wird in besonders konstruierten Heizkesseln aus den Abgasen nicht nur die restliche fühlbare Wärme sondern auch der größte Teil der latenten Wärme entzogen und für das Heizsystem genutzt. Dabei werden die Abgase bis unter den Taupunkt abgekühlt, der mitgeführte Wasserdampf kondensiert und setzt dabei Wärme frei. Die Abgastemperaturen können bis auf unter 40° Celsius sinken. Dadurch sind wesentlich höhere Nutzungsgrade des eingesetzten Brennstoffes erreichbar.

Da bei Niedertemperaturkesseln, insbsondere bei den sogenannten "Brennwert"-Kesseln die Temperatur der Abgase bis unter 100° Celsius abgesenkt wird, entstehen flüssige Kondensate, und zwar nicht nur Kondenswasser, sondern es kondensiert auch die ursprünglich in dem gasförmigen oder flüssigen Brennstoff enthaltene Schwefelverbindung in Form von Schwefelsäure aus. Die flüssigen Kondensate müssen nicht nur abgeleitet werden, sondern durch ihr Auftreten besteht auch die Notwendigkeit, die Abgasleitungen zumindest auf ihren Innenflächen derart auszubilden, daß sie beispielsweise von Schwefelsäure nicht angegriffen werden. Bisher übliche Abgasleitungen aus Stahl oder Eisenblech sind daher ungeeignet. Es wurden auch schon Abgasrohre aus Kunststoffen verwendet. Jedoch sind nicht alle Kunststoffe geeignet, weil zu fordern ist, daß die Kunststoffe eine hohe Wärmebeständigkeit haben, da nicht immer sichergestellt werden kann, daß die Abgase eine Temperatur haben, die 100° Celsius nicht übersteigt. Eine weitere Schwierigkeit beim Einsatz von Kunststoffen für die Abgasrohre besteht darin, daß diese Rohre in geschlossener Form gespritzt oder extrudiert werden müssen. Das erfordert nicht nur entsprechend große Spritzmaschinen und Formwerkzeuge, die entsprechend teuer sind, sondern es können auch bestimmte Wandstärken nicht unterschritten werden - aus form- und spritztechnischen Gründen - und dadurch wird der Verbrauch an den hier geeigneten, höherwertigen Kunststoffen wesentlich höher als dies für den Einsatzzweck unbedingt erforderlich wäre.

Die Erfindung bezieht sich auch auf eine flexible Abgasleitung, insbesondere in Form eines mit Wellungen versehenen Schlauches.

Bekannte derartige Abgasleitungen sind aus einem einzigen Material hergestellt. Dabei ergibt sich jedoch das Problem, daß das Material im Hinblick auf die Flexibilität ausgewählt werden muß und sich daher häufig Korrosionsprobleme bei metallischen Abgasleitungen aufgrund der Rauchgase und des gelegentlichen Anfalls von Kondensat oder aber bei Verwendung von Polymeren Probleme aufgrund deren Empfindlichkeit gegen mechanische Beschädigungen ergeben.

Erfindungsgemäß wird daher vorgeschlagen, daß die Abgasleitung aus einem mehrschichtigen Material besteht.

Durch diese Maßnahmen kann durch entsprechende Wahl der verschiedenen Materialien einerseits eine hohe Korrosionsbeständigkeit und andererseits ein erheblicher Schutz der Abgasleitung gegen Beschädigungen unter Beibehaltung der Flexibilität erreicht werden.

In diesem Zusammenhang kann weiter vorgesehen sein, daß die Abgasleitung aus mehreren, vorzugsweise drei, Schichten aufgebaut ist, wobei vorzugsweise daß die äußere Schicht durch ein vorzugsweise leicht verformbares Metall, zum Beispiel aus Aluminium, und die innerste Schicht aus einem polymeren Kunststoff, zum Beispiel PVDF, gebildet ist.

Dadurch wird aufgrund der Verwendung des Polymers, das einerseits entsprechend flexibel ist und andererseits gegen die Abgase und einen allfälligen Kondensatanfall relativ unempfindlich ist, eine hohe Beständigkeit der Abgasleitung gegen den Angriff der Abgase erreicht und andererseits durch die metallische Außenschicht ein sehr weitgehender Schutz gegen eine mechanische Beschädigung der Abgasleitung erreicht, wodurch eine entsprechend lange Lebensdauer der Abgasleitung sichergestellt ist.

Besonders vorteilhaft ist es, wenn die mittlere Schicht aus Papier besteht.

Auf diese Weise wird ein sicherer Verbund der Außen- und der Innenschicht gewährleistet, da die Papierschicht die unterschiedlichen Wärmedehnungen der beiden angrenzenden Schichten problemlos aufnehmen kann und gleichzeitig als Wärmeisolierung zwischen den beiden anderen Schichten dient, so daß es zu keiner übermäßigen Erwärmung der metallischen Außenschicht kommt.

Nach einem weiteren Merkmal der Erfindung kann vorgesehen sein, daß die einzelnen Schichten aus gewickelten Folien gebildet sind, wobei vorzugsweise die Folien der einzelnen Schichten miteinander verklebt oder verschweißt sind.

Auf diese Weise ergibt sich ein sehr einfacher Aufbau der Abgasleitung.

Weiter kann vorgesehen sein, daß die innerste Schicht aus einem kondensatbeständigen Material besteht.

Nach einem anderen Merkmal der Erfindung kann vorgesehen sein, daß die einzelnen Schichten aus überlappend gewickelten Folienstreifen gebildet sind.

Auf diese Weise können die einzelnen Schichten mit einem hohen Maß an Stabilität hergestellt werden.

Die Erfindung hat sich die Aufgabe gestellt, ein Rohr der gattungsgemäßen Art, sowie ein Verfahren und eine Vorrichtung zu seiner Herstellung, zu schaffen, das für die vorgenannten Einsatzzwecke besonders gut geeignet ist. Dieses Rohr soll eine hohe Flexibilität aufweisen, eine hohe mechanische Festigkeit und bei hoher Gasdichtigkeit bis zu seiner Innenfläche resistent sein gegen sämtliche vorkommenden Agressivitäten durch Wärme und Chemikalien, insbesondere Säuren.

Zur Lösung dieser Aufgabe ist ein Verfahren der eingangs an erster Stelle geannten Art dadurch gekennzeichnet, daß die innere Lage aus einem dünnen, hochfesten Papier und die darauffolgende Lage aus einem bis höchstens 0,3 mm starken Band aus einem thermoplastischem, jedoch bis ca. 150° Celsius wärmefesten Kunststoff besteht, der hohe Chemikalienbeständigkeit, insbesondere Säurefestigkeit aufweist, wobei die innere Papierlage anschließend an den Rillungsvorgang durch den hohlen Wickelkern abgezogen und die Kunststofflage nachfolgend in einer Heizkammer fixiert wird. Nach einer besonders vorteilhaften Verfahrensführung ist das Rohr ursprünglich aus drei Lagen gewickelt und gerillt, und zwar einer innersten Lage aus Papier, die nach dem Rillungsvorgang abgezogen wird, einer mittleren Lage aus Aluminium, die nach dem Fixiervorgang in der Heizkammer durch den hohlen Wickeldorn abgezogen wird, so daß ein lediglich aus einer Lage gewickeltes und gerilltes Rohr aus Kunststoff gewonnen ist.

Das auf dem Wickelkern überlappend gewickelte Kunststoffband wird in der Rillenmutter schraubenförmig mit Rillen versehen. Die Rillenmutter besteht aus einem äußeren und inneren Rillenwerkzeug, das sich gegenüber dem Wickelkern dreht. Bei der Erzeugung der Rillen und damit Verformung des aus Kunststoffband gewickelten Rohres entsteht Reibung zwischen der Rillenmutter und dem Kunststoff des Rohres. Diese Reibung erzeugt Wärme. Dabei kann die Temperatur derart ansteigen, daß sie den thermoplastischen Kunststoff zumindest anschmilzt oder teigig werden lässt, so daß eine weitere Verformung unmöglich wird. Eine Kühlung des äußeren Teils der Rillenmutter zur Abführung der entstehenden Reibungswärme ist ohne weiteres möglich. Der innere Teil der Rillenmutter kann jedoch zur Abführung der Reiungswärme nicht gekühlt werden. Der Einsatz eines mitgewickelten Papierbandes vermindert einerseits das Entstehen von Reibung und damit Reibungswärme und andererseits das unmittelbare Einwirken der Reibungswärme auf den Kunststoff. Da das mit aufgewickelte Papier der Innenlage lediglich eine Fertigungshilfe ist, wird es nach dem Rillungsvorgang abgezogen und innerhalb des hohlen Wickeldornes abgeführt. In der nachgeordneten Heizkammer wird das lediglich aus Kunststoff bestehende, schraubenförmig gerillte Rohr fixiert, das heißt, es wird so weit erwärmt, daß die sich überlappenden Ränder des gewickelten Bandes anschmelzend miteinander fest und dicht verbinden. Die Erwärmung richtet sich nach dem jeweils eingesetzten thermoplastischen Kunststoff und seinen besonderen Anschmelzeigenschaften. Um zu vermeiden, daß sich bei der Erwärmung aneinanderliegende Flanken der Rillen des Rohres durch Anschmelzen miteinander verbinden, wird auf das Rohr in der Heizkammer ein entsprechender Zug vom Rohrende her ausgeübt, der eine Dehnung des gewickelten Rohres erzeugt, um eine Berührung der Rillenflanken bei der Erwärmung zu verhindern.

Eine andere Möglichkeit besteht in der genannten Verwendung eines ebenfalls mit aufgewickelten und gerillten Metallbandes, das nach dem Fixierungsvorgang in der Heizkammer durch den hohlen Wickelkern abgezogen und damit von dem Rohr getrennt wird. Diese in der Heizkammer noch vorhandene, innerste Lage aus Metall, insbesondere aus Aluminium, hat den zusätzlichen Vorteil, daß sich aufgrund der Wärmeeinwirkung das Metall dehnt und dabei einen entsprechenden Druck auf die Kunststofflage, deren Rillung und insbesondere die Bandüberlappungen ausübt. Durch diesen zusätzlichen Druck wird insbesondere die Fixierung und auch Verschweißung der Bandüberlappungen begünstigt.

Nach einer anderen Verfahrensführung kann das Rohr auch mit einer dritten, äußeren Lage aus Papier gewickelt werden, die nach dem Rillungsvorgang abgezogen wird, so daß eine Kühlung des äußeren Teils der Rillungsmutter nicht erforderlich ist.

Wenn es beispielsweise aus Stabilitätsgründen oder um andere physikalische Eigenschaften des Rohres zu verbessern, erwünscht ist, kann statt der äußeren Lage aus Papier auch eine äußere Lage aus Metall, vorzugsweise Aluminium oder Kupfer, und gegebenenfalls eine weitere Lage aus Papier bandförmig mit aufgewickelt und gerillt werden. Dabei ist es besonders vorteilhaft, daß eine äußere, aus Metall bestehende Lage eine Oberfläche mit einer geringen Reflexion, beispielsweise eine geschwärzte Oberfläche aufweist. Eine äußere Lage aus Metall wirkt bei der anschließenden Wärmefixierung in der Wärmekammer in gleicher vorteilhafter Weise, wie das schon vorstehend mit Bezug auf die innere Lage aus Metall beschrieben ist. Weist die äußere Lage aus Metall eine äußere Oberfläche mit geringer Reflexion auf, wird erreicht, daß die Wärmeeinwirkung in der Wärmekammer wesentlich effektiver ist. Die Wärmekammer kann dabei verkürzt werden, oder die Durchlaufgeschwindigkeit durch die Wärmekammer kann erhöht werden.

Auch nach dem eingangs beschriebenen zweiten Verfahren sind Rohre nach der Erfindung herstellbar. Danach ist ein Verfahren zum Herstellen eines flexiblen Rohres in Form eines schraubenförmig vorgerillten aus Bändern gewickelten Rohres, die während des Wickelns an ihren Rändern miteinander verfalzt werden, dadurch gekennzeichnet, daß mindestens ein Band zur Bildung des Innenrohres aus Kunststoff besteht, dessen Materialstärke höchsten 0,3 mm beträgt und der in einem Temperaturbereich von mindestens -150 °C bis +150 °C temperaturbeständig sowie hochchemikalienfest, insbesondere säurebeständig ist, zusammen mit einem Band aus dünnem Metall zur Bildung des äußeren Rohres in einer Rillenvorrichtung mit Längsrillen versehen und innigflächig miteinander verbunden werden, danach einer Wickelvorrichtung zugeführt und schraubenförmig zu einem Rohr gewickelt werden unter Verfalzung der Bandränder miteinander.

Dieses Verfahren hat den Vorteil, daß die Rillenbildung der Bänder aus den verschiedenen Materialien besser beherrschbar und beeinflußbar ist, insbesondere sind die einzelnen Fertigungsschritte, und die dazu erforderlichen Vorrichtungen, einfacher und übersichtlicher. Aufgrund der Verfalzung der Ränder der zum Rohr gewickelten Bänder läßt sich die Dichtigkeit besonders gut beherrschen, dem Rohr läßt sich zudem eine besondere, dem Verwendungszweck angepaßte Festigkeit bei einfachem Aufbau geben.

Bei der Durchführung dieses Verfahrens können die beiden Bänder aus Kunststoff und Metall getrennt der Rillenvorrichtung zugeführt und dort zur gemeinsamen Verformung miteinander vereinigt oder auch schon innigflächig miteinander verbunden der Rillenvorrichtung zugeführt werden.

Als thermoplastischer, säurebeständiger Kunststoff für das das Rohr, bzw. Innenrohr bildende Band werden vorzugsweise Fluor-Thermoplaste eingesetzt, insbesondere PTFE = Polytetrafluorethylen oder auch PVDF = Polyvinylidenfluorid. Der letztgenannte Kunststoff hat sich als besonders vorteilhaft hinsichtlich seiner Wirtschaftlichkeit und seiner Verarbeitungsfähigkeit erwiesen. Er ist nicht nur besonders säurebeständig, sondern seine Dauertemperaturbeständigkeit liegt sowohl bei sehr niedrigen Temperaturen von etwa -150 °C und reicht bis mindestens +150 °C. Das reicht für den überwiegenden Teil der Einsatzzwecke aus. Die weiteren genannten Kunststoffe haben einen noch wesentlich erweiterten Bereich der Dauertemperaturbeständigkeit.

Weitere Besonderheiten des Verfahrens ergeben sich aus der speziellen Beschreibung.

Eine Vorrichtung nach der Erfindung ist dadurch gekennzeichnet, daß der Wickelkern, als Hohlkern ausgebildet, eine Bandabzugführung nach der Rillenmutter und eine Bandabzugeinrichtung mit gegeneinanderstehenden, angetriebenen Rollen oder in Form einer Aufwickelspule am offenen Ende des Wickelkerns aufweist, sowie eine an die Bandabzugführung anschliessende Durchlaufheizkammer für das gewickelte und gerillte Rohr sowie eine nachgeordnete Rohrabzugvorrichtung, um dieses unter Zugspannung zu halten.

Durch die Bandabzugführung und -einrichtung wird erreicht, daß das zunächst als erste Lage aufgewickelte und mitgerillte Papierband nach dem Rillungsvorgang nach innen abgezogen wird um damit das aus Kunststoffband gewickelte Rohr für die Wärmebehandlung freizugeben, jedoch zuvor beim Rillungsvorgang gegen übermäßige Einwirkung von Reibungswärme zu schützen.

Sofern als innere Lage ein Metallband gewickelt ist, um die Fixierung des Kunststoffes in der Wärmekammer zu begünstigen, ist anschließend an die Wärmekammer ebenfalls eine Bandabzugführung im Inneren des Rohres bzw. des Hohlkerns angeordnet zum Abziehen des Metallbandes sowie eine Bandabzugvorrichtung am offenen vorderen Ende des Wickelkerns.

Verfahren zum Herstellen eines flexiblen Rohres in Form eines schraubenförmig vorgerillten aus Bändern gewickelten Rohres, die während des Wickelns an ihren Rändern miteinander verfalzt werden, dadurch gekennzeichnet, daß mindestens ein Band zur Bildung des Innenrohres aus Kunststoff besteht, dessen Materialstärke höchsten 0,3 mm beträgt und der in einem Temperaturbereich von mindestens -150 °C bis +150 °C temperaturbeständig sowie hochchemikalienfest, insbesondere säurebeständig ist, zusammen mit einem Band aus dünnem Metall zur Bildung des äußeren Rohres in einer Rillenvorrichtung mit Längsrillen versehen und innig flächig miteinander verbunden werden, danach einer Wickelvorrichtung zugeführt und schraubenförmig zu einem Rohr gewickelt werden unter Verfalzung der Bandränder miteinander.

Nach diesem Verfahren können die beiden Bänder aus Kunststoff und Metall getrennt der Rillenvorrichtung zugeführt und in dieser Vorrichtung miteinander vereinigt und flächig miteinander verbunden werden.

Die beiden Bänder können andererseits auch aus Kunststoff und Metall bereits vor der Einführung in die Rillenvorrichtung flächig innig miteinander verbunden sein.

Das nach dem vorbeschriebenen Verfahren und der Vorrichtung hergestellte Rohr weist eine innerste, gegebenenfalls einzige Wickellage aus einem Kunststoffband auf, dessen Materialstärke höchstens 0,3 Millimeter beträgt, wobei der Kunststoff in einem Temperaturbereich von mindestens -150 °C bis +150 °C temperaturbeständig und hochchemikalienfest, insbesondere säurefest ist.

Die innerste Lage des Rohres besteht aus einem Kunststoffband aus PVDF = Polyvinylidenfluorid oder aus PTFE = Polytetrafluorethylen und das bzw. die äußeren Lagen bildende Band (Bänder) besteht (bestehen) aus dünnem Metall, vorzugsweise Aluminium oder Edelstahl.

Durch diese äußere Lage wird die mechanische Festigkeit des Rohres verbessert, sowie auch die Beständigkeit gegen von außen einwirkende Klima- und Temperatureinflüsse.

Diese genannten Kunststoffe weisen die in der Aufgabenstellung genannten Eigenschaften auf, sie sind jedoch verhältnismäßig teuer. Durch die Verwendung dieser Kunststoffe in Kombination mit Außenlagen aus Metall besteht die Möglichkeit, die Bänder der innersten Lage mit einer verhältnismäßig sehr geringen Stärke auszuführen, weil durch den besonderen Aufbau des Rohres aus mehreren Lagen, wobei die äußeren Lagen aus Metall bzw. speziell aus Aluminium bestehen, insbesondere die mechanische Festigkeit des Rohres, die für die Praxis erforderlichen Werte in hervorragender Weise erfüllt, andererseits jedoch die Flexibilität des Rohres in keiner Weise beeinträchtigt wird.

Der Bedarf an teurem Kunststoff für derartige Rohre ist wesentlich geringer, als bei bisher bekannten auf andere Weise hergestellten Rohren und dadurch ergibt sich ein bedeutsamer wirtschaftlicher Vorteil, der die Verwendung der Rohre nach der Erfindung auf weiten Gebieten erst ermöglicht. Hinzu kommt, daß die Rohre nach der Erfindung eine hohe Flexibilität aufweisen, so daß beim Verlegen in der Praxis lediglich die Anschlüsse an den Abgasstutzen der Feuerstelle herzustellen sind und ggfs. auch ein Anschluß an dem in Freie führende Ende des Rohres in Form eines Paßstückes oder einer Regenabdeckung oder dergleichen. Irgendwelche Verbindungen mit Winkelstücken, Krümmern oder dergleichen sind nicht erforderlich, so daß der Anschluß und Einbau auf der Baustelle nur geringen Zeitaufwand erfordert und damit entsprechend wirtschaftlich ist. Weiterhin läßt sich auch aufgrund des Aufbaus des Rohres mit äußeren Metall-Lagen eine sehr gute und dichte Verschweißung der innersten aus Kunststoff bestehenden Lage herstellen, so daß die erforderliche Dichtigkeit für derartige Rohre gewährleistet ist. Obwohl die gattungsgemäßen aus verschiedenen Lagen bestehenden bekannten Rohre in den verschiedenen Lagen auch schon unterschiedliche Materialien aufwiesen, ist die Materialkombination des Rohres nach der Erfindung bisher unbekannt und noch nicht verwendet worden. Die vorgenannten Eigenschaften und Vorteile eines Rohres nach der Erfindung zeigen jedoch, daß ein solches Rohr insbesondere wirtschaftlich überragende Vorteile bietet, wobei der Einsatzzweck jedoch nicht auf das genannte Beispiel bei Niedertemperaturfeuerungen beschränkt ist. Auch in der Kältetechnik bei Tiefsttemperaturen sind derartige Rohre hervorragend geeignet, da die genannten Kunststoffe eine Dauertemperaturbeständigkeit aufweisen, die von etwa -150 °C bis mindestens +150 °C reicht.

Bei der Verwendung eines Kunststoffes der PTFE-Gruppe für die innerste Lage des Rohres ist es vielfach ausreichend und zweckmäßig, nur eine einzige äußerste Lage aus Edelstahl in Form eines entsprechend gewickelten Bandes zu verwenden, da dadurch die erwünschte mechanische Festigkeit schon zu erreichen ist.

Die Stärke des Kunststoffbandes für die innerste Lage kann geringer sein als 0,3 mm. Dadurch wird ein sehr geringer Verbrauch des teuren Kunststoffes erreicht und damit eine hohe Wirtschaftlichkeit.

Die Erfindung wird nachstehend anhand eines Ausführungsbeispiels mit Bezug auf die Zeichnungen näher erläutert. In den Zeichnungen zeigen
- Figur 1:: eine schematische Seitenansicht, teilweise geschnitten, einer Vorrichtung nach der Erfindung;
- Figur 2:: eine schematische Seitenansicht, teilweise abgeschnitten, einer anderen Fertigungsvorrichtung nach der Erfindung;
- Figur 3:: eine Ansicht, teilweise geschnitten, eines Rohres nach der Erfindung;
- Figur 4:: einen Querschnitt durch eine Rohrwandung als Ausschnitt aus der Figur 3;
- Figur 5:: Querschnitt durch ein Rohr aus mehreren Lagen;
- Fig. 5a:: entsprechend der Figur 5 in verbesserter Ausführung;
- Figur 6:: Ansicht eines Rohrabschnittes, hergestellt mit einer Vorrichtung nach Figur 2;
- Figur 7:: Teilquerschnitt durch ein Rohr nach Figur 6;
- Figur 8:: Stark vergrößerter Teilquerschnitt nach den Figuren 6 und 7.

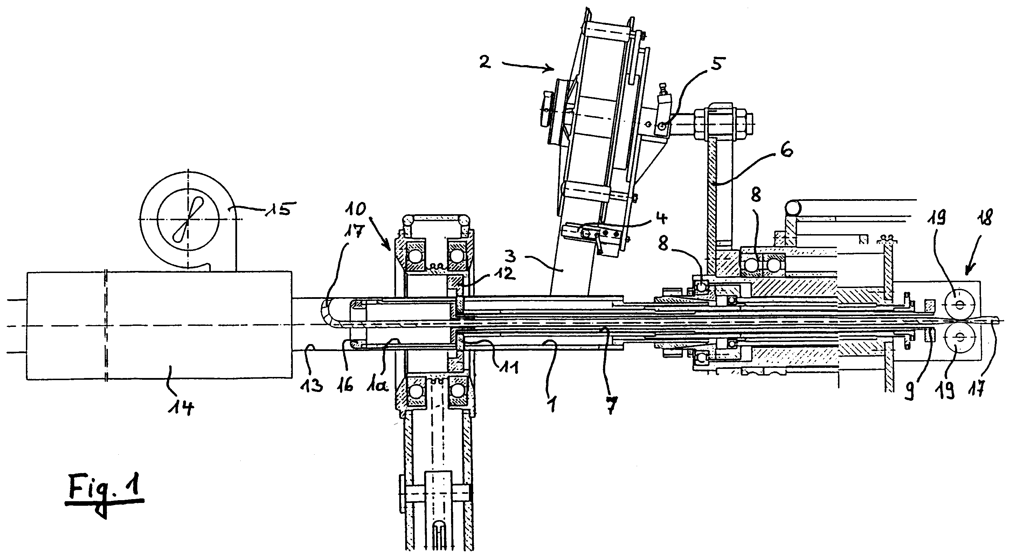

Die in Figur 1 wiedergegebene schematische Darstellung einer Vorrichtung zum Herstellen von Rohren nach der Erfindung ist an mehreren Stellen durch entsprechende Ausschnitte verkürzt wiedergegeben. Die Vorrichtung besteht aus einem Wickelkern 1 um den eine Bandspule 2 im Anstellwinkel der Wicklung kreisend herumbewegt wird, um das Band 3 von der Spule 2 auf den Wickelkern 1 schraubenförmig aufzuwickeln.

Die Spule 2 ist drehbar auf einer Welle gelagert und mit einer Führungs- und Hemmvorrichtung 4 versehen, um beim Aufwickeln auf den Wickelkern 1 dem Band eine gewisse Spannung zu geben und zu verhindern, daß das Band 3 sich von der Spule 2 unkontrolliert abwickeln kann. Die Drehwelle der Spule 2 ist schwenkbar mit einem Gelenk 5 an einem Dreharm 6 befestigt. Mittels des Schwenkgelenkes 5 kann der Anstellwinkel der Spule 2 und damit der Wickelwinkel des Bandes 3 gegenüber dem Wickelkern 1 je nach den gewünschten Vorgaben eingestellt werden. Der Dreharm 6 ist um den Wickelkern 1 bzw. seine Lagerung 7 mittels entsprechenden Wälzlagern 8 gelagert und angetrieben.

Die Lagerung 7 bzw. Halterung des Wickelkerns 1 ist, wie dieser als hohles Rohr ausgebildet und am vorderen Ende der Vorrichtung mit einer Mündungsöffnung 9 versehen. Die Anordnung ist derart getroffen, daß der Wickelkern 1 mit den unterschiedlichsten Durchmessern auf der Lagerung 7 anzubringen ist, um Rohre mit unterschiedlichen Durchmessern herstellen zu können. Es ist hier lediglich eine kreisend angetriebene Bandwickelspule 2 dargestellt. Selbstverständlich können mehrere solcher Spulen angeordnet sein, wenn mehrere Lagen von Bändern übereinanderliegend zum Rohr gewickelt werden sollen, wobei diese mehreren Lagen auch aus unterschiedlichen Materialien bestehen können. Im allgemeinen sind Vorrichtungen dieser Art derart ausgebildet, daß dann statt eines einzigen Dreharmes 6 zur Lagerung der Spule 2 speichenartig mehrere derartiger Dreharme 6 auf einer gemeinsamen Lagerung und im Winkel gegeneinander versetzt angeordnet sind und die entsprechenden Spulen 2 tragen, die selbstverständlich jeweils mit eigenen Schwenkverbindungen 5 an den Dreharmen 6 angeordnet sind, um die Wickelwinkel einstellen zu können.

Der Wickelkern 1 ist nach einem Bereich, der dem Aufwickeln des oder der Bänder 3 dient, von der Rillenmutter 10 umgeben, die ihrerseits drehend um den Wickelkern 1 angetrieben ist und aus einem inneren Teil 11 und einem äußeren Teil 12 besteht. Der innere Teil 11 bildet gewissermaßen das Ende des Halterungsrohres 7, das zu diesem Zweck über einen eigenen Antrieb synchron mit dem Antrieb des äußeren Teils 12 gedreht wird. Zwischen dem inneren Teil 11 und dem äußeren Teil 12 der Rillenmutter wird das aus Bändern 3 gewickelte Rohr auf dem Wickelkern hindurchgeführt und schraubenförmig mit Rillen versehen bzw. die Rillen werden in die Wandung eingeformt, wobei der Steigungswinkel der Rillen, die durch die Rillenmutter eingeformt sind, üblicherweise unterschiedlich ist, gegenüber dem Steigungswinkel der schraubenförmig gewickelten Bänder 3.

Hinter der Wickelmutter 10 ist der Wickelkern noch fortgesetzt mit dem Abschnitt 1a zur Führung des gerillten und flexiblen Rohres 13, das daran anschließend eine Durchlaufheizkammer 14 durchwandert. Diese Durchlaufheizkammer 14 ist bei dem hier dargestellten Beispiel mit Heißluft über einen Ventilator 15 beschickt. Selbstverständlich können in der Durchlaufheizkammer 14 statt dessen auch Heizstrahler oder dergl. zur Erwärmung des durchlaufenden Rohres angeordnet sein.

Die einfachste Ausführungsform eines Rohres nach der Erfindung wird mit zwei Bandlagen gewickelt, das heißt, es sind mindestens zwei Dreharme 6 mit einem gemeinsamen Antrieb verbunden. An den beiden Dreharmen ist jeweils eine Spule 2 drehbar und in den Wickelwinkel einstellbar angeordnet. Die Spule 2, die die innere Lage auf den Wickelkern 1 wickelt, enthält ein Band 3 aus Papier, während die Spule 2, die die darüberliegende Lage wickelt, ein Band 3 aus Kunststoff und zwar aus PVDF oder PTFE auf den Wickelkern und über die dort schon befindliche Papierlage wickelt. Diese beiden schraubenförmig übereinander gewickelten Bandlagen bilden auf dem Wickelkern 1 ein glattes Rohr, das, der Wickelsteigung folgend, der Rillenmutter 10 zugeschoben wird, um dort mit schraubenförmigen Rillen versehen zu werden. Im Betrieb der Vorrichtung erfolgt der Vorschub des gewickelten glatten Rohres mittels der Rillenmutter, die ja beim Rillungsvorgang formschlüssig die Wandung des glatten Rohres ergreift, dieses schraubenförmig mit Rillen versieht und damit weitertransportiert.

Am Ende des Abschnittes 1a des Wickelkerns ist eine Stützpapierführung 16 angeordnet. Wenn der Anfang des gewickelten und gerillten Rohres mit seiner Vorschubbewegung dieses Ende mit der Papierführung 16 überragt, wird die innere Bandlage 17 des gewickelten und gerillten Rohres, die aus einem Papierband besteht, von der äußeren Lage getrennt und über die Papierführung 16 durch den hohlen Wickelkern 1a und 1 bzw. das dort angeordnete Halterungsrohr 7 zurückgeführt bis zum vorderen Ende 9 des Halterungsrohres 7. Aus der Rohrmündung 9 wird das Papierband 17 durch eine Abzugvorrichtung 18, die aus zwei angetriebenen gegenläufigen Rollen oder Walzen 19 besteht, gleichmäßig abgezogen. Da das Papierband 17 im Rohr schraubenförmig gewickelt ist, wird es selbstverständlich auch gewissermaßen spiralig abgezogen, wie das in der Zeichnung dargestellt ist.

In die Heizkammer 14 wird demnach, nach dem hier beschriebenen Ausführungsbeispiel, ausschließlich das aus einer Lage aus einem Kunststoffband gewickelte und gerillte Rohr eingeführt und durch die in der Heizkammer 14 erfolgende Wärmeeinwirkung fixiert, das heißt, die einander überlappenden Ränder des Kunststoffbandes werden in der Heizkammer 14 soweit erweicht oder angeschmolzen, daß sie sich fest und dicht miteinander verbinden, so daß das die Heizkammer verlassende schraubenförmig gewickelte und flexible Rohr aus Kunststoff weitgehend gasdicht ist.

Bei dieser Erwärmung und Fixierung des aus Kunststoff bestehenden Rohres besteht die Gefahr, daß gegeneinander anliegende Flanken der Rillen sich ebenfalls miteinander verbinden und dadurch zumindest die Flexibilität des Rohres beeinträchtigt wird. Um dies zu verhindern, wird in einfachster Weise durch eine entsprechende hier nicht dargestellte Vorrichung am Ende der Heizkammer 14 das Rohr innerhalb der Heizkammer untetr Zugspannung gehalten, also mit einem geringen Zug abgezogen, so daß innerhalb der Heizkammer verhindert wird, daß Flanken von Rillen aneinanderliegen.

In der Praxis hat es sich jedoch als besonders vorteilhaft gezeigt, wenn zumindest als Innenlage des in dem Band aus Kunststoff gewickelten Rohres eine Lage aus Aluminium- oder Kupferband gewickelt und selbstverständlich auch mitgerillt wird. Unter bestimmten Umständen kann diese innerste Lage aus einem Metallband die einzige "Hilfs-" Lage sein und es kann auf eine innerste Lage aus Papier, wobei das Papierband 17 vor der Heizkammer 14 abgezogen wird, verzichtet werden. Eine mitgewickelte und gerillte innerste Lage aus Metallband bewirkt in der Heizkammer 14, aufgrund ihrer Erwärmung und darauf erfolgenden Dehnung, daß sie einen Druck auf die äußere bzw. darauffolgende Lage aus Kunststoff ausübt, so daß dadurch ein besseres und sichereres Fixieren bzw. Miteinander-Verschmelzen der aufeinanderliegenden Kunststofflagen an den Rändern des Kunststoffbandes bewirkt wird. Die innere Lage aus Metallband verhindert auch selbstverständlich wirksam, daß die Flanken der Rillung des Kunststoffrohres nicht unmittelbar gegeneinanderliegen können und in dem Heizkanal miteinander verschmelzen oder verhaften. Auch wird durch den Einsatz einer innersten Lage aus Metallband und der besseren thermischen Leitfäigeit des Metalls eine gleichmäßige Verteilung der Wärme und Erwärmung des Kunststoffes erreicht. Das mitgewickelte, mitgerillte und durch den Heizkanal 14 mitbeförderte Metallband, das die innerste Lage bildet, wird nach Verlassen des Heizkanals in gleicher Weise nach innen von dem fertigen Kunststoffrohr abgezogen, wie das zuvor mit Hinblick auf das Papierband 17 beschrieben ist. Das Metallband wird ebenfalls zunächst durch das Rohr in dem Heizkanal und dann weiter durch den hohlen Wickelkern und das Halterungsrohr 7 bis zum vorderen Ende geführt und dort aus der Mündung 9 heraus, mittels der Abzugeinrichtung 18, 19, abgezogen.

Beim Wickeln des Rohres kann auch zusätzlich auf das Kunststoffband ein weiteres Band 3 aus Metall, vorzugsweise Aluminium oder Kupfer, von einer entsprechenden Spule 2 aufgewickelt werden, um dann gemeinsam mit den anderen Bandlagen in der Rillenmutter 10 gerillt und damit zum flexiblen Rohr ausgebildet zu werden. Diese äußere Lage aus Metall wirkt in der Heizkammer 14 in gleicher Weise positiv, wie das zuvor schon in Zusammenhang mit der inneren Lage aus Metallband beschrieben ist. Diese Wirkung kann noch verbessert werden dadurch, daß das Metallband der äußeren Lage auf seiner äußeren Oberfläche derart behandelt ist, daß diese Oberfläche eine geringe Wärmereflexion aufweist, beispielsweise kann die Oberfläche geschwärzt sein. Dadurch wird die Wärmeaufnahme in der Heizkammer intensiviert, so daß diese Heizkammer 14 verkürzt werden kann oder auch die Durchlaufgeschwindigkeit durch die Heizkammer erhöht werden kann. Diese äußere Lage aus Metall wird nach dem Verlassen der Heizkammer nicht von dem Rohr entfernt, sie dient vielmehr zur Verbesserung insbesondere der mechanischen Eigenschaften des Rohres aus Kunststoff, wenn dies für die verschiedensten Einsatzzwecke erwünscht ist.

Selbstverständlich kann auf die Kunststofflage zunächst eine äußere Lage aus Papierband gewickelt werden, insbesondere wenn die Gefahr besteht, daß in der Heizkammer 14 die äußeren Rillenflanken sich aneinanderlegen und aneinanderschmelzen. Diese äußere Papierlage kann nach Verlassen der Heizkammer auf einfache Weise entfernt werden, sie kann jedoch auch auf dem Rohr verbleiben, wenn das für die Einsatzzwecke des Rohres erwünscht ist, sie kann auch eine Zwischenlage bilden, auf die ursprünglich eine weitere Lage aus Metallband gewickelt ist, so daß das Rohr dann aus einer innersten Lage aus Kunststoff, einer Zwischenlage aus Papier und einer äußersten Lage aus Metallband besteht, wobei selbstverständlich sämtliche Lagen einheitlich in der Rillenmutter 10 schraubenförmig gerillt sind und ein flexibles Rohr ergeben. Wesentlich ist, daß die innere Lage des Rohres immer aus dem schon beschriebenen Kunststoff mit hoher Temperatur- und Chemikalienbeständigkeit besteht und eine hohe Gasdichtigkeit aufweist.

Die Erwärmung in der Heizkammer 14 erfolgt zweckmäßig auf eine Temperatur von 230 °C. Bei einer Beschickung der Heizkammer 14 mit Warmluft ist die Heizkammer bei der bevorzugten Fertigungs- und damit Durchlaufgeschwindigkeit des Rohres etwa zwölf Meter lang und die Durchlaufgeschwindigkeit des Rohres beträgt etwa 1,2 bis 1,3 Meter pro Minute. Bei einer Anordnung von Wärmestrahlern in der Heizkammer 14 beträgt deren Länge etwa einen Meter, bei der gleichen Durchlaufgeschwindigkeit. Die in dem Rohr erzeugten Rillen haben vorzugsweise eine Tiefe von 3 bis 3,5 Millimeter bei etwa sechshundert Rillen pro Meter.

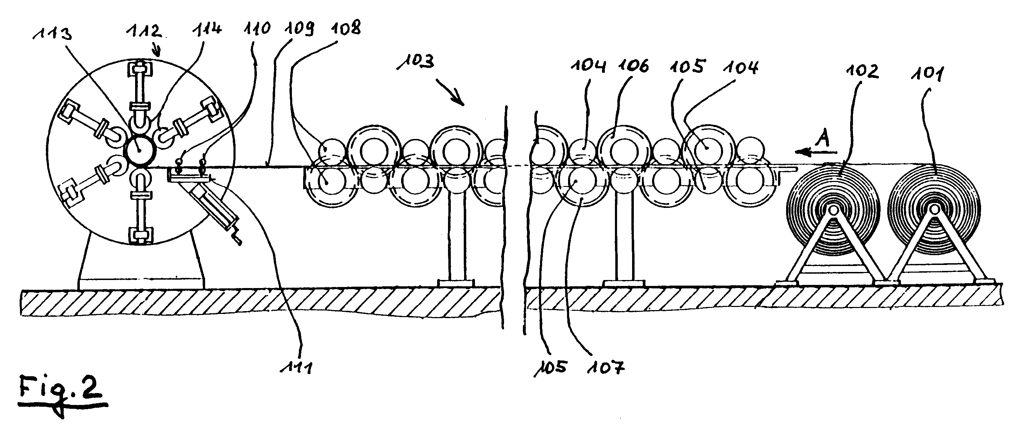

In Figur 2 ist eine andere Vorrichtung dargestellt - zur Fertigung von Rohren nach der Erfindung. Diese Vorrichtung bezieht sich auf das eingangs an zweiter Stelle genannte Verfahren. Damit werden Rohre hergestellt, die aus vorgerillten Bändern schraubenförmig auf einem Kern zum Rohr gewickelt werden, wobei während des Wickelvorgangs die Bandränder, die sich gegenseitig überlappen, miteinander verfalzt werden.

Die Vorrichtung nach Figur 2 besteht aus zwei hintereinanderstehenden Vorrats-Haspeln. Auf der äußeren Haspel 101 ist ein Vorrat von Metallband aufgespult, auf der in Fertigungsrichtung dahinterstehenden Haspel 102 ist ein Vorrat von Kunststoffband aufgespult. Der Kunststoff ist eine Fluor-Verbindung. Beide Bänder haben im wesentlichen gleiche Breite, d.h. das Kunststoffband kann auch etwas schmaler sein als das Metallband.

Die Fertigungsrichtung entspricht dem Pfeil A. Es ist erkennbar, daß beim gleichzeitigen Abziehen der Bänder von den Haspeln 101 und 102 diese sich übereinanderlegen, wobei das Kunststoffband - von der Haspel 102 - unter dem Metallband zu liegen kommt.

Die übereinanderliegenden Bänder werden einer Rillenvorrichtung 103 zugeführt, die hier teilweise unterbrochen dargestellt ist. Diese Rillenvorrichtung besteht aus einer größeren Anzahl von Walzenpaaren, wobei die Walzen 104 und 105, die jeweils ein Paar bilden, übereinander angeordnet sind, die Walze 104 über der Walze 105 und zwischen sich den Durchlaß bzw. Durchzug für das Band bilden. Die Walzen 104 und 105 sind angetrieben durch auf ihren Drehwellen angeordnete Zahnräder 106 und 107, die jeweils wechselseitig ineinandergreifen, so daß sämtliche Walzen 104 und 105 der gesamten Rillenvorrichtung 103 gleichlaufend von einem hier nicht dargestellten Antrieb gedreht werden.

Die Walzenpaare 104, 105 sind an ihren Mantelflächen mit ineinandergreifenden Rillen versehen, wobei in der Mitte der Mantelflächen beginnend, Anzahl und Tiefe der Rillen an den Walzenpaaren in Fertigungsrichtung, also von rechts nach links, zunehmen.

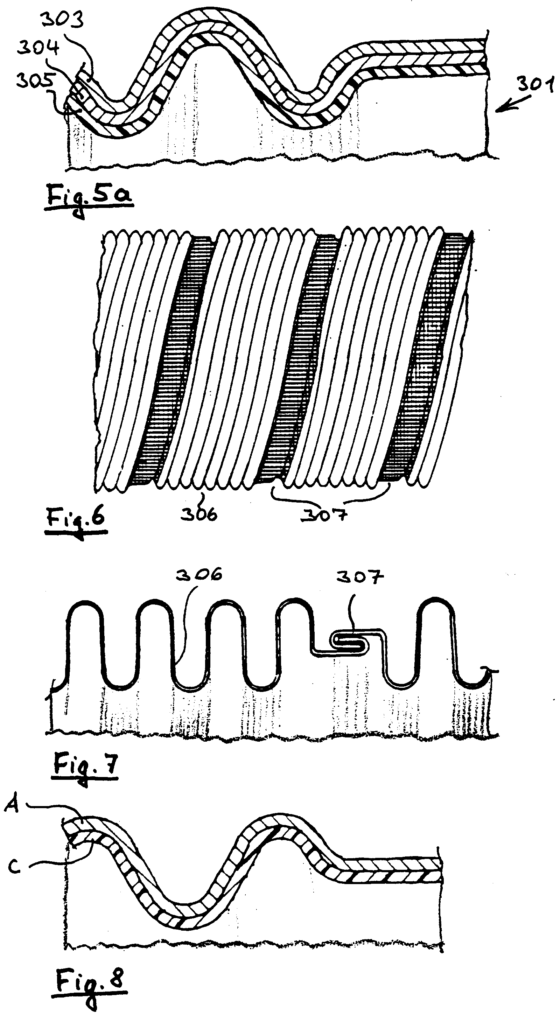

Das durch die Rillenvorrichtung 103 hindurchgezogene Band wird demnach mit in Längsrichtung verlaufenden Rillen versehen, so daß der Querschnitt etwa die Form einer Sinuskurve aufweist, wie das in den Figuren 7 und 8 gezeigt ist. Dabei werden die Randbereiche zunächst nicht von der Formgebung erfaßt, sie bleiben eben und werden durch gesonderte Walzenpaare 108 am Ende der Vorrichtung 103 nach oben bzw. unten abgewinkelt. Die durch die Verformung erreichte größere Stärke des Bandes in der Seitenansicht ist mit dem Bezugszeichen 109 verdeutlicht.

Das vorgerillte Band 109 wird nach Verlassen der Rillenvorrichtung 103 der Rohrwickelvorrichtung 112 zugeführt.

Die Rohrwickelvorrichtung 112 ist zweckmäßig in einem Winkel zur Rillenvorrichtung 103 angeordnet, der etwa dem Winkel entspricht, mit dem das vorgerillte Band schraubenförmig zum Rohr gewickelt wird. Sie besteht aus einer Halterungsplatte auf der verstellbar Andruckrollen 114 angeordnet sind. Im Zentrum der Halterungsplatte rotiert der Wickelkern 113, auf dem die Andruckrollen 114 mit ihren verstellbaren Halterungen ausgerichtet sind. In Einlaufrichtung vor dem Wickelkern 113 ist eine Bandführung 111 angeordnet, die zwei einstellbare Walzenpaare 110 aufweist und im Winkel gegenüber dem Wickelkern 113 einstellbar ist, um das zugeführte Band 109 in das, dem Durchmesser des jeweilig eingesetzten Wickelkerns und damit des erzeugten Rohres, der Breite des Bandes 109 und dem davon abhängigen Wickelwinkel einzustellen.

Bei schraubenförmigen Aufwickeln des Bandes 109 auf den Wickelkern 113 und damit Ausformen des Rohres, wird das Band 109 von den ersten Andruckrollen 114 am Einlauf um den Kern herumgebogen, von den weiteren Rollen 114 werden dann die übereinandergelegten Abwinkelungen an den Bandkanten zu festen und dichten Falzen 307 geformt und zusammengedrückt.

So entsteht ein Rohr entsprechend den Figuren 6 bis 8. In der Ansicht Figur 6 ist zu erkennen, daß bei einem solchen Rohr eine Anzahl von Rillen jeweils von einem Falz 307 begrenzt und u.s.f.. Durch die Rillungen 306 erhält das Rohr die erwünschte Flexibilität und Steifheit - durch die Falze 307 die Dichtigkeit und ebenfalls zusätzliche Formsteifigkeit.

In Figur 7 ist ein Schnitt durch die Wandung des Rohres nach Figur 6 dargestellt, es ist sowohl die Rillung 306 als auch die Falzung 307 zu erkennen. Der Falz 307 kann auf verschiedene bekannte Weisen geformt und zusammengelegt sein.

In Figur 8 ist eine weitere Vergrößerung diese Querschnitts der Rohrwandung dargestellt. Die Rohrwandung besteht aus einer inneren Wandung C aus Kunststoff bzw. einem Innenrohr aus Kunststoff und aus einer äußeren Wandung A aus Metall bzw. aus einem Außenrohr. Die beiden Wandungen A und C sind zweckmäßig flächig innig miteinander verbunden. Im Bereich der Falzung 307 bewirkt insbesondere eine während oder nach der endgültigen Herstellung des Falzes erfolgende Wärmeeinwirkung, ein Erweichen des Kunststoffes und damit eine besonders gute Abdichtung.

Das in dem Verfahren verwendete Band aus den genannten Kunststoffen hat eine Stärke von höchstens 0,3 Millimeter. Damit wird wesentlich weniger Kunststoffmaterial für ein solches Rohr verbraucht, als bei der Fertigung eines vergleichbaren Rohres im Spritzverfahren, wobei eine Wandstärke unter 0,8 Millimeter nicht ausführbar ist.

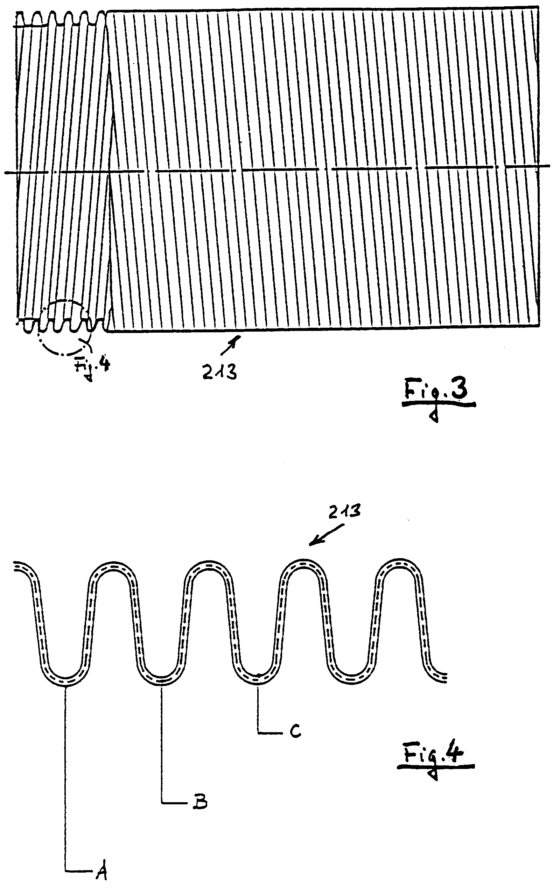

In Figur 3 ist ein Abschnitt eines Rohres 213 nach der Erfindung, wie es mit der vorher beschriebenen Vorrichtung erzeugt ist, dargestellt, wobei ein Teil der Wandung weggebrochen ist, um den Querschnitt zu zeigen. Es ist erkennbar, daß es sich um ein schraubenförmig gerilltes Rohr handelt, das dadurch eine hohe Flexibilität hat. Die Wicklung des Bandes, das heißt, die Linie, die die Bandkante des schraubenförmig gewickelten Bandes zeigt, ist dabei in dieser Zeichnung nicht dargestellt, um die Übersichtlichkeit nicht zu beeinträchtigen. Die Bandwicklung erfolgt jedoch üblicherweise mit einem größeren Steigungswinkel als die Rillung, so daß durch das Schneiden der Rillen mit der Bandkante im Winkel schon eine nicht unerhebliche mechanische Festigkeit des Rohres erreicht wird. Je nach Einsatzzweck ist selbstverständlich eine Überlappung der Kanten jedes gewickelten Bandes vorgesehen. Diese Überlappung kann für bestimmte Einsatzzwecke jeweils bis zur Bandhälfte reichen, so daß die aus einem Band gewickelte Rohrwandung, aufgrund der jeweils hälftigen Überlappung der aufeinandergrenzenden Windungen, praktisch aus zwei Bandstärken besteht.

In der Figur 4 ist die vergrößerte Einzelheit des Schnittes durch die Rohrwandung nach der Figur 3 wiedergegeben. Es ist erkennbar, daß die Rillenflanken in einem sehr spitzen Winkel zueinander verlaufen, so daß daraus zu entnehmen ist, daß bei einem leichten Druck in Achsrichtung des Rohres eine Berührung der Flanken der einzelnen Rillen, insbesondere in der Nachbarschaft der Rundungsübergänge, erfolgen kann. Die hier dargestellte Rohrwandung besteht aus drei Lagen und zwar einer Innenlage C, die aus Kunststoff besteht, einer Mittellage B, die aus Papier oder Metall bestehen kann, sowie aus einer Außenlage A, die ebenfalls aus Papier oder Metall bestehen kann. Selbstverständlich ist es möglich, noch weitere äußere Lagen anzufügen, je nach Einsatzzweck und Anforderungen, die an das Rohr gestellt werden. Wesentlich ist jedoch, daß das Rohr nach der Erfindung aus einer einzigen Lage aus Kunststoff bestehen kann, der Hochwärme- und Chemikalienbeständig ist, und daß diese Lage aus Kunststoff bei mehrlagigen Rohren immer die innerste Lage bildet.

Das Rohr nach der Erfindung entsprechend der Figur 3 weist schraubenförmig angebrachte Rillen mit geringem Steigungswinkel auf. Die mit größerem Steigungswinkel gewickelten Bänder aus denen die Wandung des Rohres besteht, sind hier nicht dargestellt, um die Übersichtlichkeit nicht zu stören.

Die Wandung des Rohres 213 selbst, die im Querschnitt in Figur 4 dargestellt ist, weist eine etwa sinusförmige Form auf, wobei die Flanken der einzelnen Rillen teilweise gradlinig verlaufen und im spitzen Winkel gegeneinander gestellt sind. Bei einer Sonderform können sie jedoch auch parallel zueinander verlaufen. Durch die Ausbildung dieser Rillen wird in bekannter Weise die besonders gute Flexibilität derartiger Rohre erreicht.

Im einzelnen besteht die Wandung aus einer inneren Lage C aus dem genannten Kunststoff, also aus PVDF oder PTFE, in einer Stärke von höchsten 0,3 mm. Die darauf folgende mittlere Lage B besteht nach diesem Ausführungsbeispiel aus Aluminiumfolie, und die darauf folgende äußere Lage A besteht ebenfalls aus Aluminiumfolie. Diese drei Lagen sind aus Bändern mit gleicher Steigung, jedoch versetzt gegeneinander, aufgewickelt und anschließend gerillt, so daß das entstehende Rohr hohe Festigkeit und sehr gute Flexibilität erreicht. Bei der inneren Lage aus Kunststoff sind die Überlappungen des Kunststoffbandes, die beim Wickeln entstehen, miteinander dicht verschweißt, so daß das entstandene Rohr neben seiner hohen mechanischen Festigkeit und Flexibilität auch die für die eingangs genannten Einsatzzwecke erforderliche Gasdichtigkeit aufweist.

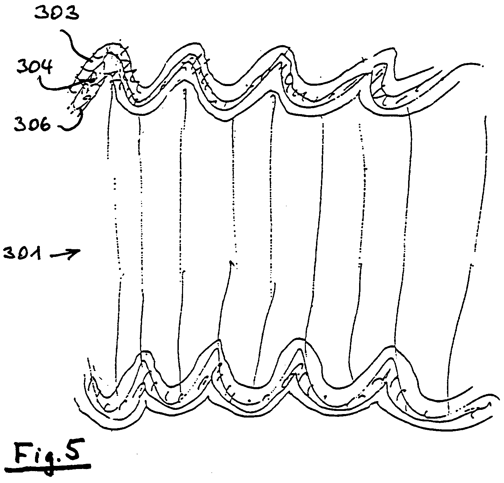

Die Wand der Abgasleitung 301 nach Figur 5 ist dreischichtig aufgebaut. Dabei ist die äußere Schicht 303 aus einem Metall, zum Beispiel Aluminium, Edelstahl oder Kupfer, hergestellt und schützt gegen eine mechanische Beschädigung.

Die mittlere Schicht 304 besteht aus gegebenenfalls getränktem Papier und die innerste Schicht 305 aus einem Polymer, zum Beispiel PVDF.

Die innerste und die äußerste Schicht 305 bzw. 303 sind mit der mittleren Schicht 304 verklebt und auf diese Weise miteinander verbunden.

## Patentansprüche

1. Verfahren zum Herstellen eines flexiblen Rohres in Form eines schraubenförmig aus Bändern gewickelten und gerillten Rohres bei dem mindestens zwei Bandlagen versetzt gegeneinander auf einen Kern (1) zu einem Rohr (13) gewickelt und anschließend schraubenförmig gerillt werden, **dadurch gekennzeichnet**, daß die innere Lage aus einem dünnen, hochfesten Papier und die darauffolgende Lage aus einem bis höchstens 0,3 mm starken Band aus einem thermoplastischen, jedoch bis ca. 150 °C wärmefesten Kunststoff besteht, der hohe Chemikalienbeständigkeit, insbesondere Säurefestigkeit aufweist, wobei die innere Papierlage anschließend an den Rillungsvorgang durch den hohlen Wickelkern (1) abgezogen und das Kunststoffrohr (13) nachfolgend in einer Heizkammer (14) fixiert wird.

2. Verfahren nach Anspruch 1, **dadurch gekennzeichnet**, daß das Rohr ursprünglich aus drei Lagen gewickelt und gerillt ist und zwar einer innersten Lage aus Papier, die nach dem Rillungsvorgang abgezogen wird, einer mittleren Lage aus Aluminium, die nach dem Fixiervorgang in der Heizkammer (14) durch den hohlen Wickelkern (1) abgezogen wird, so daß ein lediglich aus einer Lage gewickeltes und gerilltes Rohr aus Kunststoff gewonnen ist.

3. Verfahren nach Anspruch 1, **dadurch gekennzeichnet**, daß in der Heizkammer (14) durch einen entsprechenden Zug vom Rohrende her eine Dehnung des gewickelten Rohres (13) erfolgt, um eine Berührung der Rillenflanken bei der Erwärmung zu verhindern.

4. Verfahren nach einem der vorstehenden Ansprüche, **dadurch gekennzeichnet**, daß eine aufgewickelte äußere Lage aus Papier ebenfalls nach dem Rillungsvorgang abgezogen wird.

5. Verfahren nach einem der vorstehenden Ansprüche, **dadurch gekennzeichnet**, daß vor dem Rillungsvorgang eine weitere äußere Lage aus Metall, vorzugsweise Aluminium oder Kupfer und ggfs. eine weitere Lage aus Papier bandförmig aufgewickelt werden.

6. Verfahren nach dem vorhergehenden Anspruch, **dadurch gekennzeichnet**, daß das zusätzlich als äußere Lage aufgewickelte Aluminiumband eine äußere Oberfläche mit einer geringen Reflektion, vorzugweise eine geschwärzte Oberfläche aufweist.

7. Verfahren nach einem der vorstehenden Ansprüche, **dadurch gekennzeichnet**, daß in der Heizkammer (14) mittels Warmluft, vorzugsweise mittels Wärmestrahlern, eine Temperatur von 230 °C aufrechterhalten wird.

8. Verfahren nach einem der vorstehenden Ansprüche, **dadurch gekennzeichnet,** daß die in dem Rohr (13) erzeugten Rillen ca. 3 bis 3,5 mm Tiefe haben und etwa 600 Rillen pro Meter vorhanden sind.

9. Vorrichtung zum Herstellen eines aus Bändern (3) auf einen Kern (1) gewickelten und anschließend in einer Rillenmutter (10) schraubenförmig gerillten Rohres (13), wobei mindestens eine Bandlage aus einem thermoplastischen, jedoch bis 150 °C wärmefesten und hochchemikalienfesten, insbesondere säurebeständigen Kunststoff besteht, mit Wickeleinrichtungen (2) für die verschiedenen Bandlagen, **dadurch gekennzeichnet**, daß ein Wickelkern (1, 1a), als Hohlkern ausgebildet, eine Bandabzugführung (17) nach der Rillenmutter (11, 12) und eine Bandabzugeinrichtung mit gegeneinanderstehenden angetriebenen Rollen (19) oder in Form einer Aufwickelspule am offenen Ende des Wickelkerns (1) aufweist, sowie eine an die Bandabzugführung (17) anschließende Durchlaufheizkammer (14) für das gewickelte und gerillte Rohr (13) und eine nachgeordnete Rohrabzugvorrichtung, um dieses unter Zugspannung zu halten.

10. Vorrichtung nach Anspruch 9, **dadurch gekennzeichnet**, daß bei Nacheinander-Anordnung von Bandwickelvorrichtungen (2) für Papier, Aluminium und Kunststoff und ggfs. weiteren anschließend an die Durchlaufheizkammer (14) eine Bandabzugführung (17) im Inneren des Rohres (13) bzw. des Hohlkernes (1a) angeordnet ist zum Abziehen des Aluminiumbandes, sowie eine Bandabzugeinrichtung (18) in der vorbeschriebenen Weise am offenen vorderen Ende (9) des Wickelkerns (1) für das Aluminiumband.

11. Verfahren zum Herstellen eines flexiblen Rohres in Form eines aus vorgerillten Bändern gewickelten Rohres, die während des Wickelns an ihren Rändern miteinander verfalzt werden, **dadurch gekennzeichnet**, daß mindestens ein Band (102) zur Bildung des Innenrohres aus Kunststoff besteht, dessen Materialstärke höchsten 0,3 mm beträgt und der in einem Temperaturbereich von mindestens -150 °C bis +150 °C temperaturbeständig sowie hochchemikalienfest, ins besondere säurebeständig ist, zusammen mit einem Band (101) aus dünnem Metall zur Bildung des äußeren Rohres in einer Rillenvorrichtung (103) mit Längsrillen versehen und innig flächig miteinander verbunden werden, danach einer Wickelvorrichtung (112) zugeführt und schraubenförmig zu einem Rohr gewickelt werden unter Verfalzung der Bandränder miteinander.

12. Verfahren nach Anspruch 11, **dadurch gekennzeichnet**, daß die beiden Bänder aus Kunststoff und Metall getrennt der Rillenvorrichtung (103) zugeführt und in dieser Vorrichtung miteinander vereinigt und flächig miteinander verbunden werden.

13. Verfahren nach Anspruch 11, **dadurch gekennzeichnet**, daß die beiden Bänder aus Kunststoff und Metall bereits vor der Einführung in die Rillenvorrichtung (103) flächig innig miteinander verbunden sind.

14. Verfahren nach Anspruch 1 oder 11, **dadurch gekennzeichnet,** daß die Kunststoffolie aus PVDF, PTFE oder einem anderen Kunststoff mit vergleichbaren wärme- und chemischen Eigenschaften besteht.

15. Schraubenförmig aus vorgerillten Bändern gewickeltes, flexibles Rohr, **dadurch gekennzeichnet**, daß es aus einem Innenrohr (305, C) aus Kunststoff besteht, dessen Materialstärke höchstens 0,3 mm beträgt und der in einem Temperaturbereich von mindestens -150 °C bis +150 °C temperaturbeständig sowie hochchemikalienfest, insbesondere säurebeständig ist, und weiter aus mindestens einem äußeren Rohr (303, A) aus dünnem Metall besteht, wobei beide Rohre aus vorgerilltem Band schraubenförmig unter Verfalzung (307) der Bandränder gewickelt und flächig innig miteinander verbunden sind.

16. Schraubenförmig aus Bändern gewickeltes und gerilltes flexibles Rohr, **dadurch gekennzeichnet**, daß die innerste ggfs. einzige Wickellage (305, C) des Rohres (213, 301) aus einem Kunststoffband besteht, dessen Materialstärke höchstens 0,3 mm beträgt, wobei der Kunststoff in einem Temperaturbereich von mindestens -150 °C bis +150 °C temperaturbeständig und hochchemikalienfest, insbesondere säurebeständig ist.

17. Schraubenförmig aus Bändern gewickeltes und gerilltes flexibles Rohr, g**ekennzeichnet durch** die Verwendung als Abgasleitung und dadurch, daß die äußere Schicht (303) aus Metall, z.B. Aluminium oder Edelstahl, und die innere Schicht (305) aus einem Kunststoff der Gruppe der Fluorverbindungen, vorzugsweise PVDF, gebildet ist.
